(19) Europäisches Patentamt
European Patent Office
Office européen des brevets

(11) EP 4 191 699 A1

(12) **EUROPEAN PATENT APPLICATION**
published in accordance with Art. 153(4) EPC

(43) Date of publication:
**07.06.2023 Bulletin 2023/23**

(21) Application number: **21872987.9**

(22) Date of filing: **27.09.2021**

(51) International Patent Classification (IPC):
***H01M 4/13*** *(2010.01)* ***H01M 4/62*** *(2006.01)*
***H01M 4/02*** *(2006.01)*

(52) Cooperative Patent Classification (CPC):
**H01M 4/02; H01M 4/13; H01M 4/62;** Y02E 60/10

(86) International application number:
**PCT/KR2021/013155**

(87) International publication number:
**WO 2022/065959 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2020 KR 20200125979**

(71) Applicant: **LG Energy Solution, Ltd.**
**Seoul 07335 (KR)**

(72) Inventors:
- **LEE, Geun Sung**
  **Daejeon 34122 (KR)**
- **LEE, Il Ha**
  **Daejeon 34122 (KR)**
- **SONG, In Taek**
  **Daejeon 34122 (KR)**
- **KIM, Ki Hwan**
  **Daejeon 34122 (KR)**
- **MOK, Yeong Bong**
  **Daejeon 34122 (KR)**
- **LEE, Ho Chan**
  **Daejeon 34122 (KR)**

(74) Representative: **Plasseraud IP**
**66, rue de la Chaussée d'Antin**
**75440 Paris Cedex 09 (FR)**

# (54) ELECTRODE

(57) The present application relates to an electrode, and an electrochemical element and a secondary battery comprising the same. The present application relates to an electrode comprising a current collector and an active material layer, which can provide an electrode capable of ensuring adhesion force between particles, and adhesion force between the active material layer and the current collector in high levels compared with a binder content in the active material layer. The present application can also provide an electrochemical element and a secondary battery comprising the electrode.

[Figure 4]

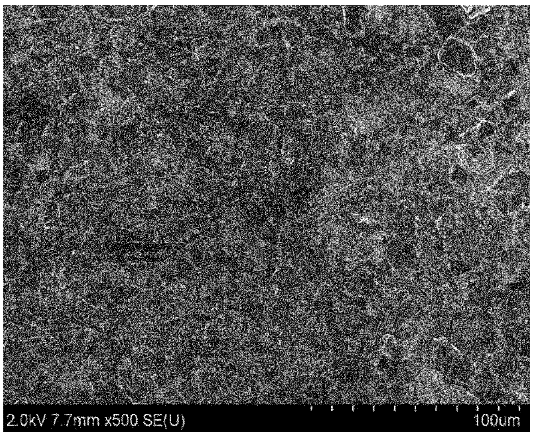


EP 4 191 699 A1

## Description

### Technical Field

The present application relates to an electrode.

### Background Art

The application area of energy storage technology is enlarged to mobile phones, camcorders, notebook PCs, or electric vehicles, and the like.

One of the research fields of energy storage technology is a secondary battery capable of charging and discharging, and research and development for improving the capacity density and specific energy of such a secondary battery is in progress.

An electrode (positive electrode or negative electrode) applied to a secondary battery is usually manufactured by forming an active material layer comprising an electrode active material and a binder on a current collector.

In order to smoothly induce movement of electrons between the active materials and electron movement between the current collector and the active material layer in the electrode of the secondary battery, the adhesion force between the active material particles and the adhesion force between the active material layer and the current collector must be secured.

In addition, when the adhesion force between the particles in the active material layer is insufficient, a phenomenon in which the particles fall off from the electrode may occur, where such a phenomenon deteriorates the stability and performance of the battery. For example, particles falling off due to insufficient adhesion force between particles from the surfaces of the negative electrode and the positive electrode may cause a microshort or the like inside the battery, which may cause deterioration of performance and fire due to a short circuit.

When the adhesion force between the active material layer and the current collector is lowered, the movement speed of electrons between the active material layer and the current collector decreases, which may cause deterioration of the speed characteristics and cycle characteristics.

The adhesion force between the particles in the active material layer or the adhesion force between the active material layer and the current collector is secured by a binder.

Therefore, if a larger amount of binder is introduced into the active material layer, higher adhesion force may be secured.

However, in this case, the ratio of the active material decreases as the ratio of the binder increases, so that there is a problem of deterioration of the battery performance due to an increase in electrode resistance, a decrease in conductivity, and the like.

## Disclosure

### Technical Problem

The present application relates to an electrode. It is one object of the present application to provide an electrode comprising a current collector and an active material layer, which can secure a high level of inter-particle adhesion force and adhesion force between the active material layer and the current collector compared to the binder content in the active material layer.

### Technical Solution

Among the physical properties mentioned in this specification, the physical properties in which the measurement temperature affects the results are results measured at room temperature unless otherwise specified.

The term room temperature is a natural temperature without warming or cooling, which means, for example, any temperature within a range of 10°C to 30°C, or a temperature of about 23°C or about 25°C or so. In addition, in this specification, the unit of temperature is Celsius (°C), unless otherwise specified.

Among the physical properties mentioned in this specification, the physical properties in which the measurement pressure affects the results are results measured at normal pressure, unless otherwise specified.

The term normal pressure is a natural pressure without pressurization or depressurization, which usually means about 1 atm or so in a level of atmospheric pressure.

In the case of a physical property in which the measurement humidity affects the results, the relevant physical property is a physical property measured at natural humidity that is not specifically controlled at the room temperature and/or normal pressure state.

The electrode of the present application comprises: a current collector; and an active material layer present on one side of the current collector. Figure 1 is a cross-sectional diagram of such an electrode, and shows a structure comprising a current collector (100) and an active material layer (200). In the electrode structure, the active material layer may be formed in contact with the surface of the current collector, or another layer may exist between the current collector and the active material layer. For example, as described below, an intermediate layer may also exist between the current collector and the active material layer.

The active material layer may comprise at least an electrode active material and a binder.

Through control of the distribution of the binder in the active material layer, particularly the distribution of the binder in the active material layer adjacent to the current collector, the present application may secure high adhesion force between particles in the active material layer, and simultaneously high adhesion force between the active material layer and the current collector. The active material layer basically comprises an electrode active material and a binder, where the adhesion force is expressed by the binder. Therefore, in order to secure the adhesion force, it is necessary to place the binder as much as possible at positions where the expression of the adhesion force is required.

However, to this end, the affinity of the respective components in the slurry used to form the active layer or the affinity of the respective components in the slurry with the current collector must be carefully considered. In addition, because a phenomenon that the binder is subjected to migration to the upper part of the active layer during the electrode formation process or after the electrode is manufactured occurs, it is not an easy task to control the position of the binder, and when the binder content in the slurry is small, such control is not easier. For example, as conceptually shown in Figure 2, since a phenomenon that the binder (2001) present in the active material layer normally migrates to the upper part of the active material layer during and/or after the electrode manufacturing process occurs, it is not easy to distribute the binder (2001) between the active material (1001) and the current collector (100). That is, among the binders distributed on the current collector, the binder contributing to the improvement of the adhesion force is a part, and when the ratio of the binder in the active material layer is small, this tendency is further increased.

In the present application, it is possible to provide an electrode capable of achieving excellent adhesion force even under a small binder content by intensively distributing the binder in a portion requiring adhesion force improvement (for example, between the surface of the current collector and the electrode active material, etc.).

The present application adjusts an occupied area ratio of the binder confirmed by the standard peel test to a high level compared to the content of the binder included in the active material layer.

The term occupied area ratio of the binder is a percentage (100×A2/A1) of the area (A2), in which the binder component is confirmed to be present on the surface of the current collector after a standard peel test to be described below, to the total surface area (A1) of the current collector. Here, the area in which the binder component is confirmed to be present can be confirmed in the manner described in Examples through FE-SEM (Field Emission Scanning Electron Microscope) analyses. The binder is included in the region where the binder component is confirmed to be present in the confirmation process, and in some cases, other additional components (e.g., a thickener, etc.) may also be included.

In one example, the ratio (AAV) of the occupied area ratio (A) of the binder confirmed in the following standard peel test performed on the electrode and the content (W) of the electrode active material in the active material layer, may be 17 or more.

That is, the electrode may satisfy Equation 1 below after the standard peel test.

[Equation 1]

$$17 \leq A/W$$

In Equation 1, A is the percentage (100×A2/A1) of the area (A2) occupied by the binder on the surface of the current collector to the total area (A1) of the surface of the current collector, and W is the binder content ratio (weight%) in the active material layer.

Since the unit of the occupied area ratio A in Equation 1 is % and the unit of the binder content ratio W is % by weight (weight%), the unit of the ratio A/W may be $wt^{-1}$.

When the composition of the slurry in the electrode manufacturing process is known, the content of the binder is substantially the same as the content ratio of the binder in the solid content (part excluding the solvent) of the relevant slurry. In addition, when the composition of the slurry in the electrode manufacturing process is not known, the content of the binder may be confirmed through TGA (thermogravimetric analysis) analysis of the active material. For example, when an SBR (styrene-butadiene rubber) binder is applied as the binder, the content of the binder may be confirmed through the content of the SBR binder obtained from the 370°C to 440°C decrease in the temperature-mass curve obtained by performing the TGA analysis of the active material layer, and increasing the temperature at a rate of 10°C per minute.

In another example, the ratio A/W may be 17.5 or more, 18 or more, 18.5 or more, 19 or more, 19.5 or more, 20 or more, 20.5 or more, 21 or more, 21.5 or more, 22 or more, 22.5 or more, 23 or more, 23.5 or more, 24 or more, 24.5 or more, 25 or more, or 25.5 or more, or may also be 50 or less, 49 or less, 48 or less, 47 or less, 46 or less, 45 or less, 44 or less, 43 or less, 42 or less, 41 or less, 40 or less, 39 or less, 38 or less, 37 or less, 36 or less, 35 or less, 34 or less, 33 or less, 32 or less, 31 or less, 30 or less, 29 or less, 28 or less, 27 or less, 26 or less, 25 or less, 24 or less, 23 or less, 22 or less, 21 or less, 20 or less, 19 or less, or 18 or less or so.

It is possible to provide an electrode securing a higher level of adhesion force compared to the applied binder under such an A/W ratio.

In the present application, it is possible to achieve the A/W ratio through control of the composition of the slurry (for example, the affinity of the solvent and the binder), the affinity between each component in the slurry and the surface of the current collector and/or the average particle diameter of the particulate matter in the slurry.

In this specification, the average particle diameter of the particulate material is a so-called D50 particle diameter or median diameter obtained by a laser diffraction method, and the method of obtaining this particle diameter is described in Examples. In addition, for example, in the case where the active material layer is a rolled layer, the average particle diameter mentioned herein for the particulate binder and the particulate active material in the active material layer is the average particle diameter before rolling, unless otherwise specified.

In addition, in one example, when two types of particulate binders (or electrode active materials) having different average particle diameters exist in the active material layer, the average particle diameter in consideration of the weight fraction of the two types of particulate binders may be defined, in this specification, as the average particle diameter of the particulate binders (or electrode active materials). For example, when the particulate binder (or electrode active material) having an average particle diameter of D1 is present in a weight of W1, and the particulate binder (or electrode active material) having an average particle diameter of D2 is present in a weight of W2, the average particle diameter D may be defined as $D=(DI\times W1+D2\times W2)/(W1+W2)$. Upon the above confirmation, the particle diameters D1 and D2, and the weights W1 and W2 are values of the same unit as each other, respectively.

The standard peel test is performed using 3M's Scotch Magic tape Cat. 810R. In order to perform the standard peel test, first, the electrode is cut to a size of 20 mm or so in width and 100 mm or so in length. The Scotch Magic tape Cat. 810R is also cut so that the horizontal length is 10 mm and the vertical length is 60 mm. Thereafter, as shown in Figure 4, the Scotch Magic tape Cat. 810R (300) is attached on the active material layer (200) of the electrode in a cross state. In the attachment, the standard peel test may be performed so that a certain portion of the Magic tape Cat. 810R (300) protrudes. Then, the protruding portion is hold, and the magic tape Cat. 810R (300) is peeled off. At this time, the peel rate and the peel angle are not particularly limited, but the peel rate may be about 20mm/sec or so, and the peel angle may be about 30 degrees or so. In addition, regarding the attachment of the Scotch Magic tape Cat. 810R (300), it is attached by reciprocating and pushing the surface of the tape with a roller having a weight of 1kg or so, and a radius and width of 50mm and 40mm, respectively, once after attaching the tape.

Through the above process, when the Scotch Magic tape Cat. 810R (300) is peeled off, the component of the active material layer (200) is peeled off together with the Scotch Magic tape Cat. 810R (300). Subsequently, the above process is repeated using the new Scotch Magic tape Cat. 810R (300).

The standard peel test may be performed by performing this process until the components of the active material layer (200) do not come off on the Scotch Magic tape Cat. 810R (300) and thus are not observed.

Regarding the matter that no component of the active material layer (200) comes off on the Scotch Magic tape Cat. 810R (300), when the surface of the Scotch Magic tape peeled from the active material layer is compared with the surface of the unused Scotch Magic tape so that the tones of both are substantially the same, it may be determined that the component of the active material layer does not come off (visual observation).

A specific way to run the standard peel test is described in Examples.

After the above standard peel test, the occupied area ratio of the binder on the current collector can be confirmed.

The type of the current collector applied in the present application is not particularly limited, where a known current collector may be used. In order to implement the above-described ratio A/W, the surface characteristics (water contact angle, etc.) of the current collector may be controlled, as described below. As the current collector, for example, a film, sheet, or foil made of stainless steel, aluminum, nickel, titanium, baked carbon, copper, carbon, stainless steel surface-treated with nickel, titanium or silver, an aluminum-cadmium alloy, and the like may be used. In order to realize the desired network region and blank region, one having surface characteristics to be described below may be selected from the current collectors, or the surface characteristics may be adjusted by additional treatment.

The thickness and shape of the current collector, and the like are not particularly limited, and an appropriate type is selected within a known range.

The active material layer formed on the current collector comprises an electrode active material and a binder.

A known material may be used as the binder, and components known to contribute to bonding of components such as the active material in the active material layer and bonding of the active material layer and the current collector may be used. As the applicable binder, one, or a combination of two or more selected from PVDF (poly(vinylidene

fluoride)), PVA (poly(vinyl alcohol)), polyvinylpyrrolidone, tetrafluoroethylene, polyethylene, polypropylene, an ethylene-propylene-diene terpolymer (EPDM), a sulfonated EPDM, SBR (Styrene-Butadiene rubber), fluororubber, and other known binders may be used.

For formation of the suitable network region, it is appropriate to use a particulate binder as the binder.

When a particulate material is used as the electrode active material, a ratio of particle diameters between the particulate binder and the electrode active material layer may be controlled in order to control the distribution of the binder in the electrode active material layer.

For example, the ratio (D1/D2) of the average particle diameter (D1, unit nm) of the particulate electrode active material to the average particle diameter (D2, unit nm) of the particulate binder may be in the range of 10 to 1,000. In another example, the ratio (D1/D2) may be 20 or more, 30 or more, 40 or more, 50 or more, 60 or more, 70 or more, 80 or more, 90 or more, 100 or more, 110 or more, 120 or more, or 130 or more, or may be 900 or less, 800 or less, 700 or less, 600 or less, 500 or less, 400 or less, 300 or less, 200 or less, or 150 or less or so.

Here, the binder may have an average particle diameter (D2) in a range of 50 nm to 500 nm. In another example, the average particle diameter (D2) of the binder may be about 70 nm or more, about 90 nm or more, about 110 nm or more, about 130 nm or more, or about 140 nm or more, or may be about 480 nm or less, about 460 nm or less, 440 nm or less, 420 nm or less, 400 nm or less, about 380 nm or less, about 360 nm or less, about 340 nm or less, about 320 nm or less, about 300 nm or less, about 280 nm or less, about 260 nm or less, about 240 nm or less, about 220 nm or less, about 200 nm or less, about 180 nm or less, or about 160 nm or less or so.

Here, the electrode active material may have an average particle diameter (D1) in a range of 1 μm to 100 μm. In another example, the average particle diameter (D1) may be about 3 μm or more, about 5 μm or more, about 7 μm or more, about 9 μm or more, about 11 μm or more, about 13 μm or more, about 15 μm or more, about 17 μm or more, or about 19 μm or more, or may also be about 90 μm or less, 80 μm or less, 70 μm or less, 60 μm or less, 50 μm or less, 40 μm or less, 30 μm or less, or 20 μm or less or so.

The respective average particle diameters D1 and D2 are average particle diameters of the respective materials in the slurry applied for preparing the active material layer. Therefore, when the real electrode is manufactured through a rolling process, there may be a slight difference from the average particle diameters D1 and D2 of the respective components identified in the active material layer.

The reason is not clear, but it is expected that the dispersion state of the binder capable of achieving the desired position of the binder is achieved in the slurry during the electrode manufacturing process by such particle diameter ratios, and the migration phenomenon of the binder is also appropriately controlled.

In addition, for formation of the suitable network region, it may be advantageous to use a binder having a solubility parameter in a range to be described below as the binder.

In the present application, it is possible to secure a high level of adhesion force while taking a relatively small ratio of the binder in the active material layer. For example, the ratio of the binder in the active material layer may be about 0.5 to 10 weight% or so. In another example, the ratio may also be further controlled in the range of 1 weight% or more, 1.5 weight% or more, 2 weight% or more, 2.5 weight% or more, 3 weight% or more, 3.5 weight% or more, or 4 weight% or more or so and/or in the range of 9.5 weight% or less, 9 weight% or less, 8.5 weight% or less, 8 weight% or less, 7.5 weight% or less, 7 weight% or less, 6.5 weight% or less, 6 weight% or less, 5.5 weight% or less, 5 weight% or less, or 4.5 weight% or less or so.

The electrode active material included in the active material layer may be a positive active material or a negative active material, and the specific type is not particularly limited. For example, as the positive electrode active material, active materials including $LiCoO_2$, $LiNiO_2$, $LiMn_2O_4$, $LiCoPO_4$, $LiFePO_4$, $LiNiMnCoO_2$ and $LiNi_{1-x-yz}Co_xM1_yM2_zO_2$ (M1 and M2 are each independently any one selected from the group consisting of Al, Ni, Co, Fe, Mn, V, Cr, Ti, W, Ta, Mg, and Mo, and x, y and z are each independently an atomic fraction of oxide composition elements, satisfying $0 \leq x < 0.5$, $0 \leq y < 0.5$, $0 \leq z < 0.5$, $0 < x+y+z \leq 1$), and the like may be used, and as the negative active material, active materials including natural graphite, artificial graphite, carbonaceous materials; lithium-containing titanium composite oxides (LTO), Si, Sn, Li, Zn, Mg, Cd, Ce, Ni or Fe metals (Me); alloys composed of the metals (Me); oxides (MeOx) of the metals (Me); and composites of the metals (Me) with carbon, and the like may be used.

In the present application, it is possible to secure excellent adhesion force while maintaining a relatively high ratio of the active material in the active material layer.

For example, the active material in the active material layer may be in the range of 1000 to 10000 parts by weight relative to 100 parts by weight of the binder. In another example, the ratio may be 1500 parts by weight or more, 2000 parts by weight or more, 2500 parts by weight or more, 3000 parts by weight or more, 3500 parts by weight or more, 4000 parts by weight or more, or 4500 parts by weight or more, or may also be 9500 parts by weight or less, 9000 parts by weight or less, 8500 parts by weight or less, 8000 parts by weight or less, 7500 parts by weight or less, 7000 parts by weight or less, 6500 parts by weight or less, 6000 parts by weight or less, 5500 parts by weight or less, 5000 parts by weight or less, 4500 parts by weight or less, 4000 parts by weight or less, 3500 parts by weight or less, 3000 parts by weight or less, or about 2500 parts by weight or less or so.

The active material layer may also further comprise other necessary components in addition to the above components. For example, the active material layer may further comprise a conductive material. As the conductive material, for example, a known component may be used without any particular limitation, as long as it exhibits conductivity without causing chemical changes in the current collector and the electrode active material. For example, as the conductive material, one or a mixture of two or more selected from graphite such as natural graphite or artificial graphite; carbon black such as carbon black, acetylene black, ketjen black, channel black, furnace black, lamp black, or summer black; a conductive fiber such carbon fiber or metal fiber; a carbon fluoride powder; a metal powder such as an aluminum powder, or a nickel powder; a conductive whisker such as zinc oxide or potassium titanate; a conductive metal oxide such as titanium oxide; a polyphenylene derivative, and the like may be used.

The content of the conductive material is controlled as necessary, without being particularly limited, but it may be usually included in an appropriate ratio within the range of 0.1 to 20 parts by weight or 0.3 to 12 parts by weight relative to 100 parts by weight of the active material. A method of determining the content of the conductive material to an appropriate level in consideration of the cycle life of the battery, and the like is known.

The active material layer may also comprise other necessary known components (e.g., thickeners such as carboxymethyl cellulose (CMC), starch, hydroxypropyl cellulose or regenerated cellulose, etc.) in addition to the above components.

The thickness of the active material layer is not particularly limited, which may be controlled to have an appropriate level of thickness in consideration of desired performance.

For example, the thickness of the active material layer may be in a range of about 10 μm to 500 μm. In another example, the thickness may be about 30 μm or more, 50 μm or more, 70 μm or more, 90 μm or more, or 100 μm or more or so, or may also be about 450 μm or less, 400 μm or less, 350 μm or less, 300 μm or less, 250 μm or less, 200 μm or less, or 150 μm or less or so.

The active material layer may be formed to have a certain level of porosity. The porosity is usually controlled by rolling during the manufacturing process of the electrode. The active material layer may have a porosity of about 35% or less or so. The porosity may also be further adjusted in the range of 33% or less, 31% or less, 29% or less, or 27% or less and/or in the range of 5% or more, 7% or more, 9% or more, 11% or more, 13% or more, 15% or more, 17% or more, 19% or more, 21% or more, 23% or more, or 25% or more. The rolling process controlled to have the porosity may contribute to the formation of the desired network region and blank region in the present application, as described below. Here, the porosity is a value calculated by a method of comparing the ratio of the difference between the real density of the active material layer and the density after rolling, and a method of calculating the porosity of the active material layer in this way is known.

In order to achieve an appropriate binder distribution in the manufacturing process of the electrode, an additional layer for control of the surface characteristics of the current collector may be present.

For example, an intermediate layer comprising a silane compound may exist between the active material layer and the current collector in the electrode.

At this time, the type of the intermediate layer is not particularly limited as long as it is possible to achieve the surface characteristics of the current collector to be described below.

For example, the intermediate layer may be a layer comprising a silane compound of Formula 1 below.

[Formula 1]

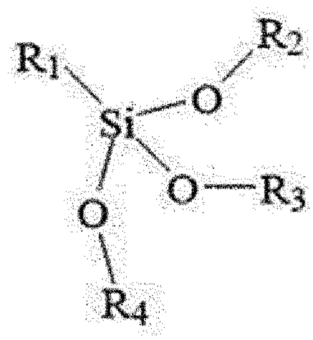

In Formula 1, $R_1$ is an alkyl group with 6 or less carbon atoms or an alkenyl group with 6 or less carbon atoms, where the alkyl group of $R_1$ may be optionally substituted with one or more amino groups, and $R_2$ to $R_4$ are each independently an alkyl group with 1 to 4 carbon atoms.

The alkyl group or alkenyl group in Formula 1 may be linear, branched, or cyclic, and in a suitable example, it may be a linear alkyl group or alkenyl group.

In one example, $R_1$ in Formula 1 may be a linear alkyl group with 1 to 6 carbon atoms, 1 to 4 carbon atoms, or 2 to 4 carbon atoms, or may be a linear alkenyl group with 2 to 6 carbon atoms, 2 to 4 carbon atoms, or 2 to 4 carbon atoms, or may be a linear aminoalkyl group with 1 to 6 carbon atoms, 1 to 4 carbon atoms, or 2 to 4 carbon atoms.

The intermediate layer may comprise the silane compound as a main component, where for example, the content of the silane compound in the intermediate layer may be 70 weight% or more, 75 weight% or more, 80 weight% or more, 85 weight% or more, 90 weight% or more, or 95 weight% or more or so. The upper limit of the content of the silane compound in the intermediate layer is 100 weight%. When a component other than the silane compound is present in the intermediate layer, the component may be a component such as a solvent used in the intermediate layer formation process, or may be an active material layer constituent that has been mitigated from the active material layer.

The thickness of the intermediate layer may be appropriately set in consideration of desired surface characteristics, which may be, for example, in the range of approximately 0.5μm to 50μm.

In another example, the thickness may be about 1 μm or more, 3 μm or more, 5 μm or more, 7 μm or more, or 9 μm or more or so, or may also be about 45 μm or less, 40 μm or less, 35 μm or less, 30 μm or less, 25 μm or less, 20 μm or less, or 15 μm or less or so.

The above-described electrode may be manufactured in the manner to be described below. In general, the electrode is manufactured by coating the slurry on the current collector, drying it, and then performing a rolling process. In the present application, by controlling the compositions of the slurry, the surface characteristics of the current collector on which the slurry is coated, drying conditions and/or rolling conditions in the above process, it is possible to form the desired network region and blank region.

For example, in the manufacturing process of the present application, as a slurry, one that a relatively hydrophobic binder (suitably a particulate binder having a specific average particle diameter while having relative hydrophobicity) is dispersed in a certain amount in a relatively polar solvent may be applied. Such a slurry is coated on a current collector whose surface characteristics are controlled, as described below. The reason is not clear, but when such a slurry is coated on the current collector, it is expected that the dispersion state of the binder in the slurry, the affinity of the solvent of the slurry with the current collector surface, the affinity of the current collector surface with the binder in the slurry and/or the particle diameter relationship therebetween in the case where the particulate material is applied, and the like are mutually combined with each other to control the position of the binder of the desired shape.

For example, the affinity of the solvent with the current collector surface affects the contact angle of the solvent on the current collector surface, where the contact angle may form a force in a certain direction in the slurry due to capillary action or the like upon evaporation of the solvent. The affinity of the binder with the solvent and the amount of the binder (also, the particle diameter in the case of the particulate binder) affect the dispersion state of the binder in the slurry, and the affinity of the binder with the current collector surface affects the dispersion state of the binder in the slurry, or the binder distribution shape into the current collector surface, and the like.

In the present application, it has been confirmed that the desired binder arrangement is achieved through the dispersion state of the binder and the evaporation aspect of the solvent when the slurry of the compositions to be described below has been formed on the current collector having the surface characteristics to be described below, and the shear force in the slurry generated thereby.

For example, the slurry applied to the manufacturing process may comprise a solvent. As the solvent, one capable of properly dispersing the slurry components such as the electrode active material is usually applied, and an example thereof is exemplified by water, methanol, ethanol, isopropyl alcohol, acetone, dimethyl sulfoxide, formamide and/or dimethylformamide, and the like.

In the present application, it may be necessary to use a solvent having a dipole moment of approximately 1.3D or more in the solvents. In another example, the dipole moment of the solvent may be further controlled in the range of about 1.35 D or more, 1.4 D or more, 1.45 D or more, 1.5 D or more, 1.55 D or more, 1.6 D or more, 1.65 D or more, 1.7 D or more, 1.75 D or more, 1.8 D or more, or 1.85 D or more or so and/or in the range of 5 D or less, 4.5 D or less, 4 D or less, 3.5 D or less, 3 D or less, 2.5 D or less, 2 D or less, or 1.9 D or less or so. The dipole moments of solvents are known for each solvent.

As the binder included in the slurry, an appropriate one of the above-described types of binders may be selected and used. In order to achieve the desired dispersion state in the solvent, it may be necessary to use a binder having a solubility parameter of about 10 to 30 $MPa^{1/2}$ or so as the binder. In another example, the solubility parameter may be 11 $MPa^{1/2}$ or more, 12 $MPa^{1/2}$ or more, 13 $MPa^{1/2}$ or more, 14 $MPa^{1/2}$ or more, 15 $MPa^{1/2}$ or more, or 16 $MPa^{1/2}$ or more, or may be 28 $MPa^{1/2}$ or less, 26 $MPa^{1/2}$ or less, 24 $MPa^{1/2}$ or less, 22 $MPa^{1/2}$ or less, 20 $MPa^{1/2}$ or less, or 18 $MPa^{1/2}$ or less. The solubility parameter of such a binder may be confirmed through a literature (e.g., Yanlong Luo et al., 2017, etc.). For example, in the above-mentioned types of binders, a type having such a solubility parameter may be selected.

A particulate binder may be used as the binder, and for example, the use of the particulate binder having an

average particle diameter in the above-mentioned range.

The content of the binder in the slurry may be controlled in consideration of the desired dispersion state. For example, the binder may be included in the slurry so that the concentration of the binder relative to the solvent (=100×B/(B+S), where B is the weight (g) of the binder in the slurry, and S is the weight (g) of the solvent in the slurry.) is about 0.1 to 10% or so. In another example, the concentration may be 0.5% or more, 1% or more, 1.5% or more, 2% or more, 2.5% or more, 3% or more, or 3.5% or more, or may also be 9% or less, 8% or less, 7% or less, 6% or less, 5% or less, 4% or less, 3% or less, or 2.5% or less or so.

The slurry may comprise the electrode active material in addition to the above components. As the electrode active material, an appropriate type may be selected from the above-described types, and in consideration of the contribution to the desired dispersion state, an electrode active material in the form of particles, which has an average particle diameter (D50 particle diameter) in the above-described range, and has a ratio with the average particle diameter of the binder in the above range, may be used.

The ratio of the electrode active material in the slurry may be adjusted so that the ratio of the electrode active material in the active material layer may be achieved.

In addition to the above components, the slurry may also comprise other components including the above-described conductive material, thickener, and the like, depending on the purpose.

Such a slurry may be applied on the surface of the current collector. In this process, the coating method is not particularly limited, and a known coating method, for example, a method such as spin coating, comma coating, or bar coating may be applied.

The surface characteristics of the current collector to which the slurry is applied may be controlled.

For example, the surface of the current collector to which the slurry is applied may have a water contact angle of 50 degrees or more. In another example, the water contact angle may be further controlled in the range of 100 degrees or less, 95 degrees or less, 90 degrees or less, 85 degrees or less, 80 degrees or less, or 75 degrees or less or so and/or in the range of 55 degrees or more, 60 degrees or more, 65 degrees or more, 70 degrees or or more, 75 degrees or more, 85 degrees or more, or 90 degrees or more or so.

For example, the surface of the current collector to which the slurry is applied may have a DM (diiodomethane) contact angle of 30 degrees or more. In another example, the DM contact angle may be further controlled in the range of 70 degrees or less, 65 degrees or less, 60 degrees or less, 55 degrees or less, 50 degrees or less, or 45 degrees or less or so and/or in the range of 35 degrees or more, 40 degrees or more, 45 degrees or more, 50 degrees or more, 55 degrees or more, or 60 degrees or more or so.

For example, the surface of the current collector to which the slurry is applied may have a surface energy of 65 mN/m or less. The surface energy may be 60 mN/m or less, 55 mN/m or less, 50 mN/m or less, 45 mN/m or less, 40 mN/m or less, 35 mN/m or less, or 30 mN/m or less or so, or may also be 25 mN/m or more, 27 mN/m or more, or 29 mN/m or more or so.

For example, the surface of the current collector to which the slurry is applied may have a dispersion energy of less than 45 mN/m. In another example, the dispersion energy may be 40 mN/m or less, 35 mN/m or less, or 30 mN/m or less or so, or may also be about 23 mN/m or more, 25 mN/m or more, or 27 mN/m or more or so.

For example, the surface of the current collector to which the slurry is applied may have a polar energy of 20 mN/m or less. In another example, the dispersion energy may be 18 mN/m or less, 16 mN/m or less, 14 mN/m or less, 12 mN/m or less, 10 mN/m or less, 8 mN/m or less, 6 mN/m or less, 4 mN/m or less, 2 mN/m or less, or 1.5 mN/m or less, or may also be 0.5 mN/m or more, 1 mN/m or more, 1.5 mN/m or more, 2 mN/m or more, 2.5 mN/m or more, 3 mN /m or more, 3.5 mN/m or more, 4 mN/m or more, 4.5 mN/m or more, 5 mN/m or more, 5.5 mN/m or more, 6 mN/m or more, 6.5 mN/m or more, or 7mN/m or more or so.

Here, the surface energy, the dispersion energy, and the polar energy are physical quantities that can be obtained by the OWRK (Owens-Wendt-Rabel-Kaelble) method based on the water contact angle and the DM contact angle.

A desired active material layer may be obtained by applying the above-mentioned slurry to the current collector surface satisfying at least one, two or more, or all of surface characteristics as described above.

Among the above-described current collectors, a current collector exhibiting the water contact angle and the like may be selected, but there are cases where the current collector does not normally satisfy the above-described characteristics, so that surface treatment may also be performed in order to satisfy the desired surface characteristics.

For example, the surface characteristics may be satisfied by forming the above-described intermediate layer on the surface of the current collector, or by applying other known treatments (especially, hydrophobizing treatment) such as plasma treatment.

The intermediate layer may be prepared, for example, through coating, annealing, washing, and drying processes, and the like, using a coating liquid in which the above-described silane compound is dispersed in a solvent. In addition, various treatment methods such as plasma treatment for controlling the surface characteristics of the current collector are known.

After the slurry is applied to the current collector surface whose surface characteristics are controlled, a drying process of the slurry may be performed. Conditions under which the drying process is performed are not particularly limited, but it may be appropriate to adjust the drying temperature within the range of about 150°C to 400°C in consideration of the desired position of the binder and the like. In another example, the drying temperature may be about 170°C or more, 190°C or more, 210°C or more, or 225°C or more or so, or may also be 380°C or less, 360°C or less, 340°C or less, 320°C or less, 300°C or less, 280°C or less, 260°C or less, or 240°C or less or so.

The drying time may also be controlled in consideration of the dispersion state considering the desired position of the binder and the like, and for example, it may be adjusted within the range of about 10 seconds to 200 seconds. In another example, the time may also be further controlled within the range of 20 seconds or more, 30 seconds or more, 40 seconds or more, 50 seconds or more, 60 seconds or more, 70 seconds or more, 80 seconds or more, or 85 seconds or more and/or within the range of 190 seconds or less, 180 seconds or less, 170 seconds or less, 160 seconds or less, 150 seconds or less, 140 seconds or less, 130 seconds or less, 120 seconds or less, 110 seconds or less, 100 seconds or less, or 95 seconds or less.

Following the drying process, a rolling process may be performed. In this case, the position of the binder and the like may be adjusted even by the rolling conditions (e.g., pressure during rolling, etc.).

For example, the rolling may be performed so that the porosity of the rolled slurry (active material layer) is about 35% or less or so. The desired network region and blank region may be effectively formed by a pressure or the like applied upon rolling performed to have such a porosity. In another example, the porosity may also be further controlled in the range of 33% or less, 31% or less, 29% or less, or 27% or less and/or in the range of 5% or more, 7% or more, 9% or more, 11% or more, 13% or more, 15% or more, 17% or more, 19% or more, 21% or more, 23% or more, or 25% or more.

The thickness of the rolled slurry (i.e., the active material layer) is within the thickness range of the active material layer as described above.

During the manufacturing process of the electrode of the present application, necessary additional processes (e.g., cutting process, etc.) may also be performed in addition to the slurry coating, drying, and rolling.

The present application also relates to an electrochemical element comprising such an electrode, for example, a secondary battery.

The electrochemical element may comprise the electrode as a positive electrode and/or a negative electrode. As long as the electrode of the present application is used as the negative electrode and/or the positive electrode, other configurations or manufacturing methods of the electrochemical element are not particularly limited, and a known method may be applied.

**Advantageous Effects**

The present application is an electrode comprising a current collector and an active material layer, which can provide an electrode capable of securing a high level of interparticle adhesion force and adhesion force between the active material layer and the current collector relative to the binder content in the active material layer.

**Description of Drawings**

Figure 1 is a cross-sectional diagram of an exemplary electrode of the present application.

Figure 2 is a conceptual diagram of a formation state of an active material layer in the prior art.

Figure 3 is a conceptual diagram of a state where a standard peel test is performed.

Figures 4 to 9 are FE-SEM images of the current collector surfaces of Examples 1 to 6, respectively.

Figures 10 to 12 are FE-SEM images of the current collector surfaces of Comparative Examples 1 to 3, respectively.

[Explanation of Reference Numerals]

100: current collector

200: active material layer

300: Scotch Magic tape

1001: electrode active material

2001: binder

## Mode for Invention

Hereinafter, the present application will be described in more detail through Examples and Comparative Examples, but the scope of the present application is not limited to the following Examples.

### 1. Measurement of contact angle and surface energy

The contact angle and surface energy were measured using a drop shape analyzer device of KRUSS (manufacturer: KRUSS, trade name: DSA100). 3 μL of water or DM (diiodomethane) drops were dropped at a rate of about 3μl/sec, respectively, and the respective contact angles were measured by a tangent angle measurement method. The surface energy, dispersion energy, and polar energy were calculated, respectively, by an OWRK (Owens-Wendt-Rabel-Kaelble) method through the contact angles of the water and DM.

### 2. Standard peel test

The standard peel test was performed using 3M's Scotch Magic tape Cat. 810R. The electrodes prepared in Examples or Comparative Examples were each cut to a size of 20mm or so in width and 100mm or so in length to obtain a sample. On the active material layer of the obtained sample, the Scotch Magic tape Cat. 810R was attached by reciprocating and pushing a roller having a weight of 1kg, a radius of 50mm, and a width of 40mm once. At this time, the Scotch Magic tape was cut to have a width of 10mm or so and a length of 60mm or so, and used, and as shown in Figure 3, the Scotch Magic tape and the electrode active material layer were attached to be crossed to a length of about 20mm or so, and the protruding part was held and peeled off. At this time, the peel rate and the peel angle were set to a speed of about 20mm/sec or so and an angle of about 30 degrees or so. A new scotch tape was replaced and used every time it was peeled off. The above process was repeated until the components of the active material layer did not come out on the surface of the Scotch Magic tape. It was visually observed whether or not the components of the active material layer came out, and when the tone did not substantially change compared to the unused tape, it was determined that the components of the active material layer did not come out.

### 3. Confirmation of occupied area of binder

After the standard peel test, the occupied area of the binder was confirmed from the current collector surface. After the standard peel test, the surface of the current collector was photographed at a magnification of 500 times with an FE-SEM (Field Emission Scanning Electron Microscope) device (manufacturer: HITACHI, trade name: S4800) to obtain an image. Regions where the surface of the current collector was not observed due to the presence of the binder and regions where the surface of the current collector was observed were divided using the Trainable Weka Segmentation Plug-in of Image J software (manufacturer: Image J), and the occupied area of the binder was measured based on these regions. In the above process, based on the brightness, the parts satisfying the parts where the brightness was 80 or less, and the parts where the brightness was 160 or more due to the height within the closed curve consisting of the relevant parts were defined as the parts occupied by the binder, and the other regions were designated as the regions where there was no binder.

### 4. Confirmation of average particle diameter (D50 particle diameter) of particulate binder and electrode active material

The average particle diameters (D50 particle diameters) of the particulate binder and the electrode active material were measured with Marvern's MASTERSIZER3000 equipment in accordance with ISO-13320 standard. Upon the measurement, water was used as a solvent. When a particulate binder or the like is dispersed in the solvent and irradiated with lasers, the lasers are scattered by the binder dispersed in the solvent, and the intensities and directionality values of the scattered lasers vary depending on the size of the particles, so that it is possible to obtain the average diameter by analyzing these with the Mie theory. Through the above analysis, a volume-based cumulative graph of the

particle size distribution was obtained through conversion to the diameters of spheres having the same volume as that of the dispersed binder, and the particle diameter (median diameter) at 50% cumulative of the graph was designated as the average particle diameter (D50 particle diameter).

**4. Measurement of adhesion force**

After rolling, the electrode was cut to have a width of 20mm or so, and the adhesion force was measured according to a known method for measuring the adhesion force of the active material layer. Upon measuring the adhesion force, the peel angle was 90 degrees, and the peel rate was 5 mm/sec or so. After the measurement, the portions where the peaks were stabilized were averaged and defined as the adhesion force.

**Example 1.**

A copper foil (Cu foil) was used as a current collector, and after adjusting the surface characteristics in the following manner, it was applied to the manufacture of the electrode.

First, a coating liquid in which ethyl trimethoxy silane was dispersed in ethanol as a solvent at a concentration of 1 weight% or so was coated on the surface of the copper foil to a thickness of about 10 μm or so using a bar coater. After coating, it was annealed at 100°C for 5 minutes or so, washed with ethanol, and then dried again at 100°C for 5 minutes or so to form a silane coating layer. The surface energy of the silane coating layer was about 29.7 mN/m or so, the dispersion energy was about 28.3 mN/m, and the polar energy was about 1.4 mN/m or so. In addition, the water contact angle was about 95 degrees, and the DM contact angle was about 60.4 degrees or so.

The slurry was prepared by mixing water, an SBR (Styrene-Butadiene rubber) binder, a thickener (CMC, carboxymethyl cellulose), an electrode active material (1) (artificial graphite (GT), average particle diameter (D50 particle diameter): 20 μm), and an electrode active material (2) (natural graphite (PAS), average particle diameter (D50 particle diameter): 15 μm) in a weight ratio of 51:2:0.6:37.1:9.3 (water: SBR: CMC: active material (1): active material (2)). Here, water is a solvent having a dipole moment of about 1.84 D or so, and the SBR binder is a binder having a solubility parameter of about 16.9 $MPa^{1/2}$ or so. The solubility parameter of the SBR binder is the value described in Yanlong Luo et al., 2017. In addition, the SBR binder was a particulate binder, which had an average particle diameter (D50 particle diameter, median particle diameter) of about 150 nm or so.

The slurry was applied to a thickness of about 280 μm or so on the surface of the silane coating layer by a gap coating method, and dried at a temperature of about 230°C for about 90 seconds. After drying, a slurry layer having a thickness of 180 μm or so was obtained, and the dried slurry layer was rolled with a conventional electrode rolling mill to have a final thickness of about 110 μm or so and a porosity of about 26% or so, thereby forming an active material layer.

The porosity of the active material layer is a value calculated by a method of comparing the ratio of the difference between the real density and the density after rolling. In addition, when considering the compositions of the slurry, the content of the SBR binder in the active material layer of the electrode is 4 weight% or so, and the content of the electrode active material (GT+PAS) is about 95 weight% or so.

**Example 2.**

A copper foil (Cu foil) was used as a current collector, and after adjusting the surface characteristics in the following manner, it was applied to the manufacture of the electrode.

A coating liquid in which allyl trimethoxy silane was dispersed in ethanol as a solvent at a concentration of 1 weight% or so was coated on the surface of the copper foil to a thickness of about 10 μm or so using a bar coater. After coating, it was annealed at 100°C for 5 minutes or so, washed with ethanol, and then dried again at 100°C for 5 minutes or so to form a silane coating layer. The surface energy of the silane coating layer was about 30.6 mN/m or so, the dispersion energy was about 29.5 mN/m, and the polar energy was about 1.1 mN/m or so. In addition, the water contact angle was about 95.8 degrees, and the DM contact angle was about 58.4 degrees or so.

Subsequently, the same slurry as used in Example 1 was applied to a thickness of about 280 μm or so on the surface of the silane coating layer by a gap coating method, and dried at a temperature of about 230°C for about 90 seconds. After drying, a slurry layer having a thickness of 180 μm or so was obtained, and the dried slurry layer was rolled with a conventional electrode rolling mill to have a final thickness of about 110 μm or so and a porosity of about 26% or so, thereby forming an active material layer.

The method of calculating the porosity of the active material layer and the contents of the SBR binder and the electrode active material in the active material layer of the electrode are the same as in Example 1.

**Example 3.**

A copper foil (Cu foil) was used as a current collector, and after adjusting the surface characteristics in the following manner, it was applied to the manufacture of the electrode.

A coating liquid in which 3-aminopropyl trimethoxy silane was dispersed in ethanol as a solvent at a concentration of 1 weight% or so was coated on the surface of the copper foil to a thickness of about 10 μm or so using a bar coater. After coating, it was annealed at 100°C for 5 minutes or so, washed with ethanol, and then dried again at 100°C for 5 minutes or so to form a silane coating layer. The surface energy of the silane coating layer was about 28.3 mN/m or so, the dispersion energy was about 27.1 mN/m, and the polar energy was about 1.2 mN/m or so. In addition, the water contact angle was about 96.8 degrees, and the DM contact angle was about 62.6 degrees or so.

Subsequently, the same slurry as used in Example 1 was applied to a thickness of about 280 μm or so on the surface of the silane coating layer by a gap coating method, and dried at a temperature of about 230°C for about 90 seconds. After drying, a slurry layer having a thickness of 180 μm or so was obtained, and the dried slurry layer was rolled with a conventional electrode rolling mill to have a final thickness of about 110 μm or so and a porosity of about 26% or so, thereby forming an active material layer.

The method of calculating the porosity of the active material layer and the contents of the SBR binder and the electrode active material in the active material layer of the electrode are the same as in Example 1.

**Example 4.**

A copper foil (Cu foil) whose surface characteristics were controlled in the same manner as in Example 1 was used as a current collector.

The slurry was prepared by mixing water, an SBR (Styrene-Butadiene rubber) binder, a thickener (CMC, carboxymethyl cellulose), an electrode active material (1) (artificial graphite (GT), average particle diameter (D50 particle diameter): 20 μm), and an electrode active material (2) (natural graphite (PAS), average particle diameter (D50 particle diameter): 15 μm) in a weight ratio of 48.5:1:0.5:45:5 (water: SBR: CMC: active material (1): active material (2)). Here, water is a solvent having a dipole moment of about 1.84 D or so, and the SBR binder is a binder having a solubility parameter of about 16.9 $MPa^{1/2}$ or so. The solubility parameter of the SBR binder is the value described in Yanlong Luo et al., 2017. In addition, the SBR binder was a particulate binder, which had an average particle diameter (D50 particle diameter, median particle diameter) of about 150 nm or so.

The slurry was applied to a thickness of about 280 μm or so on the surface of the silane coating layer by a gap coating method, and dried at a temperature of about 230°C for about 90 seconds. After drying, a slurry layer having a thickness of 180 μm or so was obtained, and the dried slurry layer was rolled with a conventional electrode rolling mill to have a final thickness of about 110 μm or so and a porosity of about 26% or so, thereby forming an active material layer.

A method of calculating the porosity of the active material layer is the same as in Example 1. In addition, when considering the compositions of the slurry, the content of the SBR binder in the active material layer of the electrode is 2 weight% or so, and the content of the electrode active material is about 97 weight% or so.

**Example 5.**

A copper foil (Cu foil) whose surface characteristics were controlled in the same manner as in Example 2 was used as a current collector.

Subsequently, the same slurry as used in Example 4 was applied to a thickness of about 280 μm or so on the surface of the silane coating layer by a gap coating method, and dried at a temperature of about 230°C for about 90 seconds. After drying, a slurry layer having a thickness of 180 μm or so was obtained, and the dried slurry layer was rolled with a conventional electrode rolling mill to have a final thickness of about 110 μm or so and a porosity of about 26% or so, thereby forming an active material layer.

The method of calculating the porosity of the active material layer and the contents of the SBR binder and the electrode active material in the active material layer of the electrode are the same as in Example 4.

**Example 6.**

A copper foil (Cu foil) whose surface characteristics were controlled in the same manner as in Example 3 was used as a current collector.

Subsequently, the same slurry as used in Example 4 was applied to a thickness of about 280 μm or so on the surface of the silane coating layer by a gap coating method, and dried at a temperature of about 230°C for about 90 seconds. After drying, a slurry layer having a thickness of 180 μm or so was obtained, and the dried slurry layer was rolled with a conventional electrode rolling mill to have a final thickness of about 110 μm or so and a porosity of about

26% or so, thereby forming an active material layer.

The method of calculating the porosity of the active material layer and the contents of the SBR binder and the electrode active material in the active material layer of the electrode are the same as in Example 4.

**Comparative Example 1.**

A copper foil (Cu foil) as a current collector was directly applied to the electrode manufacturing without a separate treatment thereon. The surface energy of the untreated copper foil surface was about 71.2 mN/m or so, the dispersion energy was about 45 mN/m, and the polar energy was about 26.2 mN/m or so.

Subsequently, the same slurry as used in Example 1 was applied to a thickness of about 280 μm or so on the surface of the copper foil layer by a gap coating method, and dried at a temperature of about 230°C for about 90 seconds. After drying, a slurry layer having a thickness of 180 μm or so was obtained, and the dried slurry layer was rolled with a conventional electrode rolling mill to have a final thickness of about 110 μm or so and a porosity of about 26% or so, thereby forming an active material layer.

The method of calculating the porosity of the active material layer and the contents of the SBR binder and the electrode active material in the active material layer of the electrode are the same as in Example 1.

**Comparative Example 2.**

A copper foil (Cu foil) was used as a current collector, and after adjusting the surface characteristics in the following manner, it was applied to the manufacture of the electrode.

A coating liquid in which dodecyl trimethoxy silane was dispersed in ethanol as a solvent at a concentration of 1 weight% or so was coated on the surface of the copper foil to a thickness of about 10 μm or so using a bar coater. After coating, it was annealed at 100°C for 5 minutes or so, washed with ethanol, and then dried again at 100°C for 5 minutes or so to form a silane coating layer. The surface energy of the silane coating layer was about 27.7 mN/m or so, the dispersion energy was about 27.4 mN/m, and polar energy was about 0.3 mN/m or so. In addition, the water contact angle was about 102.6 degrees, and the DM contact angle was about 62.2 degrees or so.

The same slurry as used in Example 1 was applied to a thickness of about 280 μm or so on the surface of the silane coating layer by a gap coating method, and dried at a temperature of about 230°C for about 90 seconds. After drying, a slurry layer having a thickness of 180 μm or so was obtained, and the dried slurry layer was rolled with a conventional electrode rolling mill to have a final thickness of about 110 μm or so and a porosity of about 26% or so, thereby forming an active material layer.

The method of calculating the porosity of the active material layer and the contents of the SBR binder and the electrode active material in the active material layer of the electrode are the same as in Example 1.

**Comparative Example 3.**

A copper foil (Cu foil) as a current collector was directly applied to the electrode manufacturing without a separate treatment thereon. The surface energy of the untreated copper foil surface was about 71.2 mN/m or so, the dispersion energy was about 45 mN/m, and the polar energy was about 26.2 mN/m or so.

Subsequently, the same slurry as used in Example 4 was applied to a thickness of about 280 μm or so on the surface of the copper foil layer by a gap coating method, and dried at a temperature of about 230°C for about 90 seconds. After drying, a slurry layer having a thickness of 180 μm or so was obtained, and the dried slurry layer was rolled with a conventional electrode rolling mill to have a final thickness of about 110 μm or so and a porosity of about 26% or so, thereby forming an active material layer.

The method of calculating the porosity of the active material layer and the contents of the SBR binder and the electrode active material in the active material layer of the electrode are the same as in Example 4.

**Test Example 1. Calculation of binder occupied area**

The electrodes of Examples and Comparative Examples were subjected to a standard peel test in the above-described manner, and the binder occupied area was confirmed. Figures 4 to 9 are FE-SEM images of Examples 1 to 6, respectively, and Figures 10 to 12 are FE-SEM images of Comparative Examples 1 to 3, respectively.

The results were described in Table 1 below.

[Table 1]

| | Example | | | | | | Comparative Example | | |
|---|---|---|---|---|---|---|---|---|---|
| | 1 | 2 | 3 | 4 | 5 | 6 | 1 | 2 | 3 |
| Binder occupied area ratio (A) (%) | 85.9 | 89.3 | 93.6 | 52.6 | 59 | 59.7 | 55.3 | 53.7 | 34.5 |
| Binder content in active material layer (W) (weight%) | 4.1 | 4.1 | 4.1 | 2.3 | 2.3 | 2.3 | 4.1 | 4.1 | 2.3 |
| A/W | 21 | 21.8 | 22.8 | 22.9 | 25.7 | 26 | 13.5 | 13.1 | 15 |

From Table 1, it can be confirmed that in the case of Examples, a high occupied area ratio of the binder is secured relative to the binder content in the active material layer.

**Test Example 2. Confirmation of adhesion force**

Adhesion force evaluation results for Examples and Comparative Examples are shown in Table 2 below.

[Table 2]

| | Example | | | | | | Comparative Example | | |
|---|---|---|---|---|---|---|---|---|---|
| | 1 | 2 | 3 | 4 | 5 | 6 | 1 | 2 | 3 |
| Adhesion force (gf/20mm) | 44 | 41.4 | 40.8 | 15.3 | 21.8 | 17.3 | 38.1 | 39.5 | 14.9 |

From Table 2, it can be confirmed that in the case of Examples, high adhesion force is secured relative to the binder content in the active material layer.

## Claims

1. An electrode, comprising:

   a current collector; and
   an active material layer on one side of the current collector,
   wherein the active material layer comprises an electrode active material and a binder,
   wherein the electrode satisfies the Equation 1 below after the following standard peel test and
   wherein the standard peel test is a test repeating a process to attach a scotch magic tape Cat. 810R on the active material layer and then peel off the scatch magic tape Cat. 810R until no component of the active material layer is observed on the scotch magic tape Cat. 810R:

   [Equation 1]

   $$17 \leq A/W$$

   wherein A is a percentage (100×A2/A1) of an area (A2) occupied by the binder on the surface of the current collector relative to the total area (A1) of the surface of the current collector, W is a content ratio (weight%) of the binder in the active material layer, and the unit of A/W is $wt^{-1}$.

2. The electrode according to claim 1, wherein the current collector is a film, sheet or foil comprising one or more selected from the group consisting of stainless steel, aluminum, nickel, titanium, baked carbon, copper, carbon, stainless steel surface-treated with nickel, titanium or silver, and an aluminum-cadmium alloy.

3. The electrode according to claim 1, wherein the binder comprises one or more selected from the group consisting of PVDF (poly(vinylidene fluoride)), PVA (poly(vinyl alcohol)), polyvinylpyrrolidone, tetrafluoroethylene, polyethylene, polypropylene, an ethylene-propylene-diene terpolymer (EPDM), a sulfonated EPDM, SBR (styrene-butadiene rubber), and fluororubber.

4. The electrode according to claim 1, wherein the binder is a particulate binder.

5. The electrode according to claim 4, wherein a ratio (D1/D2) of an average particle diameter (D1) of the electrode active material relative to an average particle diameter (D2) of the binder is in a range from 10 to 1000.

6. The electrode according to claim 5, wherein the binder has the average particle diameter in a range from 50 nm to 500 nm.

7. The electrode according to claim 1, wherein the content ratio of the binder in the active material layer is in a range from 0.5 to 10 weight%.

8. The electrode according to claim 1, wherein the electrode active material comprises one or more selected from the group consisting of $LiCoO_2$, $LiNiO_2$, $LiMn_2O_4$, $LiCoPO_4$, $LiFePO_4$, $LiNiMnCoO_2$ and $LiNi_{1-x-yz}Co_xM1_yM2_zO_2$ (M1 and M2 are each independently any one selected from the group consisting of Al, Ni, Co, Fe, Mn, V, Cr, Ti, W, Ta, Mg, and Mo, and x, y and z are each independently an atomic fraction of oxide composition elements, satisfying $0 \leq x < 0.5$, $0 \leq y < 0.5$, $0 \leq z <0.5$, $0 < x+y+z \leq 1$), natural graphite, artificial graphite, carbonaceous materials; lithium-containing titanium composite oxides, Si, Sn, Li, Zn, Mg, Cd, Ce, Ni or Fe metals (Me); alloys composed of the metals (Me); oxides (MeOx) of the metals (Me); and composites of the metals (Me) with carbon.

9. The electrode according to claim 1, wherein the electrode active material is comprised in an amount of 1000 to 10000 parts by weight relative to 100 parts by weight of the binder.

10. The electrode according to claim 1, wherein the active material layer has a thickness in a range from 10 μm to 500 μm.

11. The electrode according to claim 1, wherein the active material layer has a porosity of 35% or less.

12. The electrode according to claim 1, wherein an intermediate layer comprising a compound of Formula 1 below is present between the active material layer and the current collector:

[Formula 1]

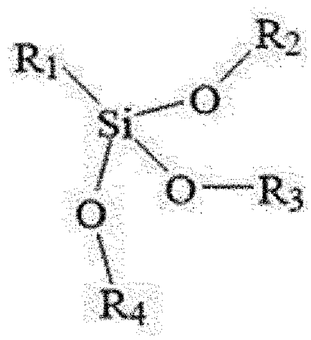

wherein, $R_1$ is an alkyl group with 6 or less carbon atoms or an alkenyl group with 6 or less carbon atoms, where the alkyl group of $R_1$ is or is not substituted with one or more amino groups, and $R_2$ to $R_4$ are each independently an alkyl group with 1 to 4 carbon atoms.

13. An electrochemical element, comprising:
the electrode of claim 1 as a negative electrode or a positive electrode.

14. A secondary battery, comprising:
the electrode of claim 1 as a negative electrode or a positive electrode.

[Figure 1]

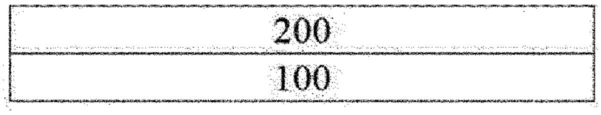


[Figure 2]

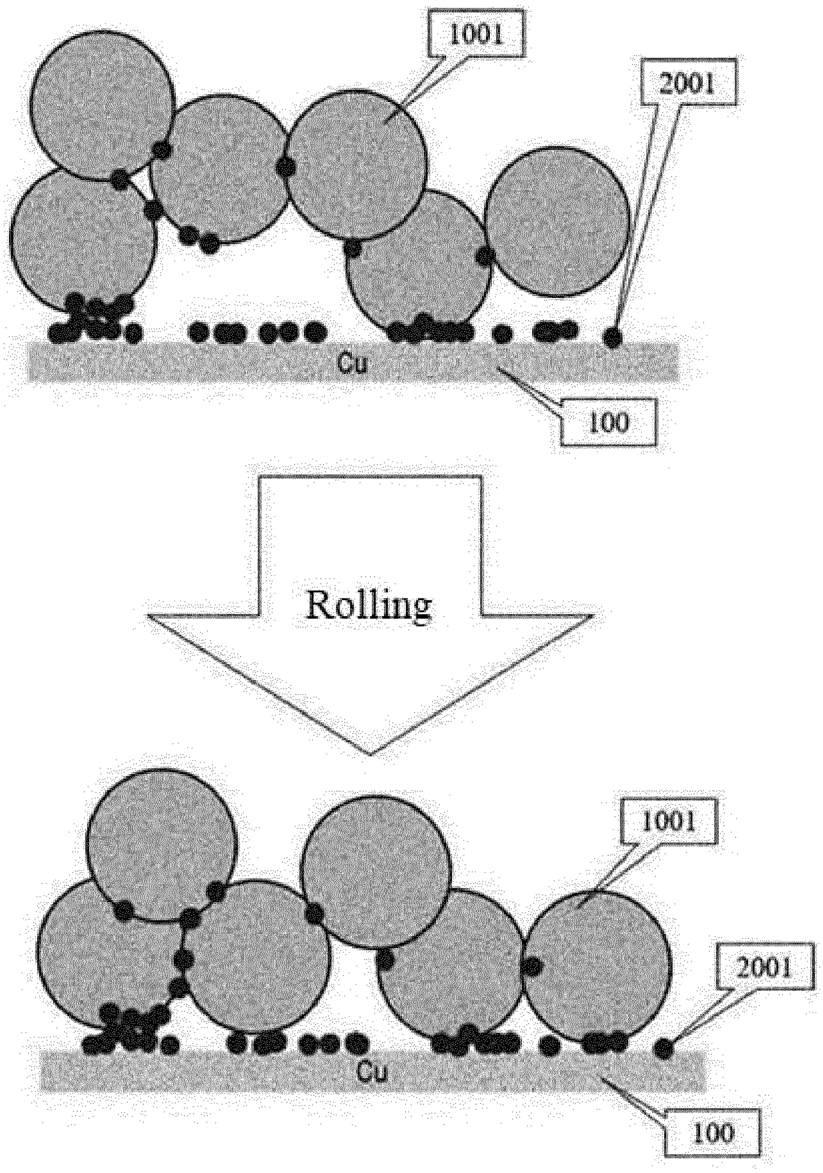

[Figure 3]

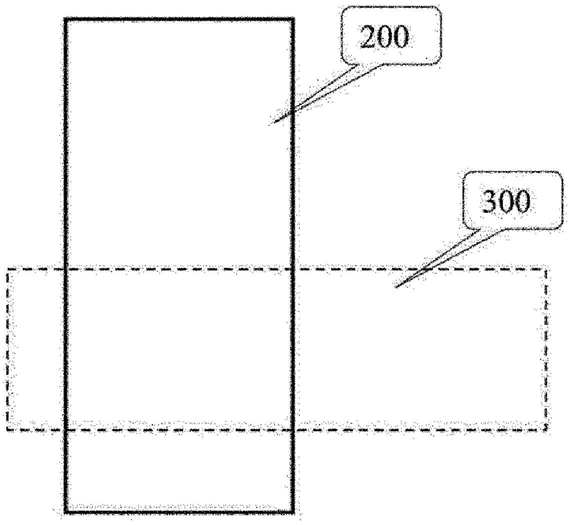


[Figure 4]

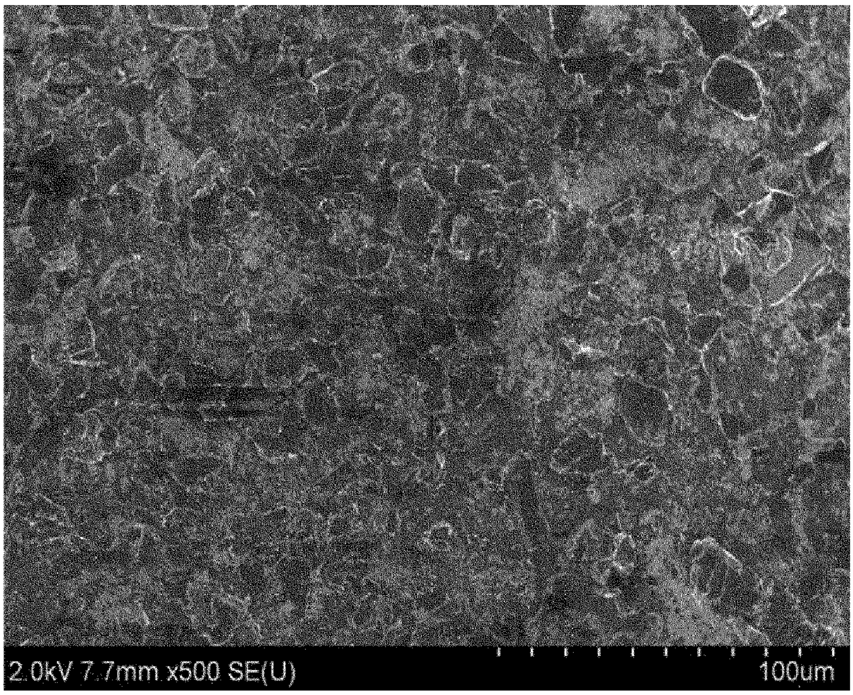

[Figure 5]

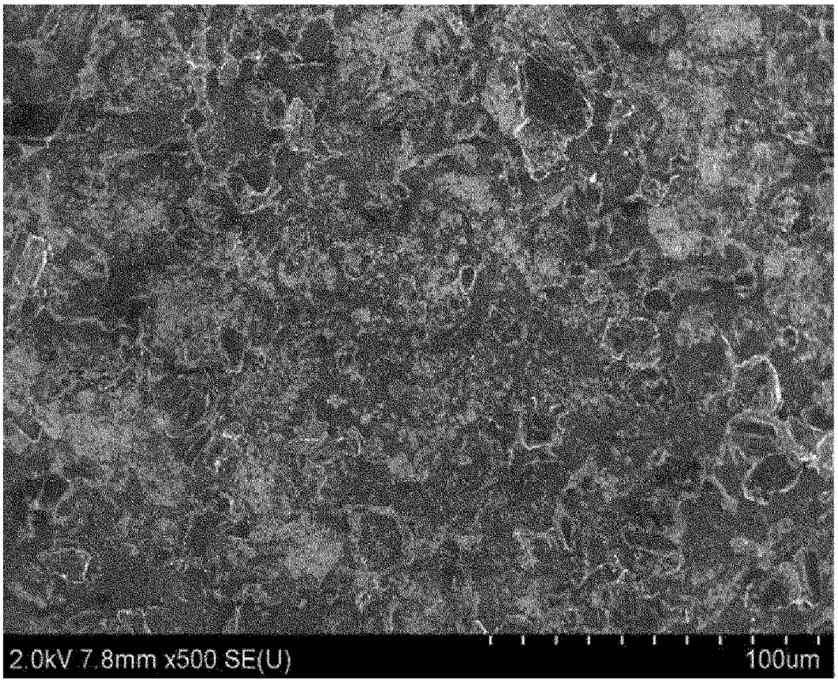


[Figure 6]

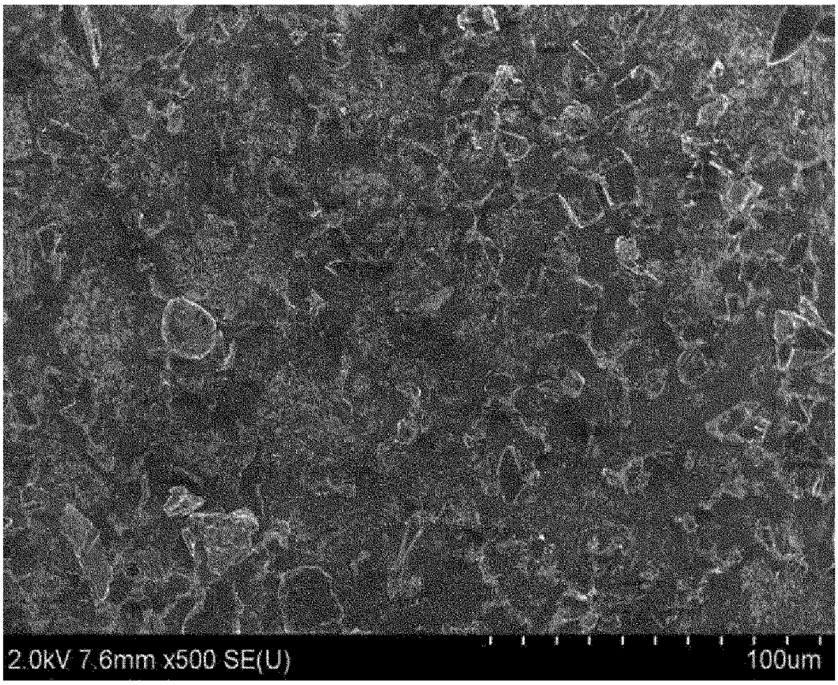

[Figure 7]

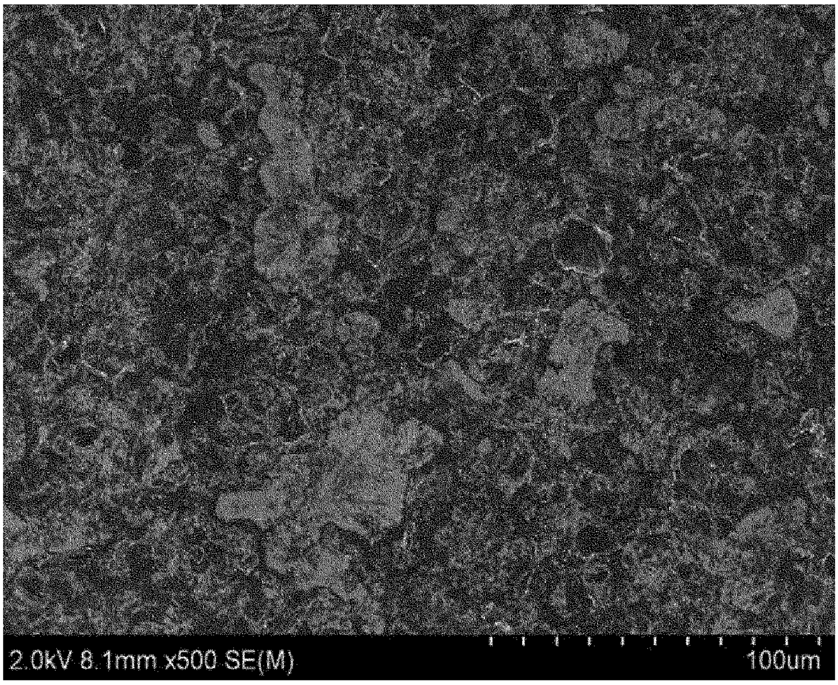


[Figure 8]

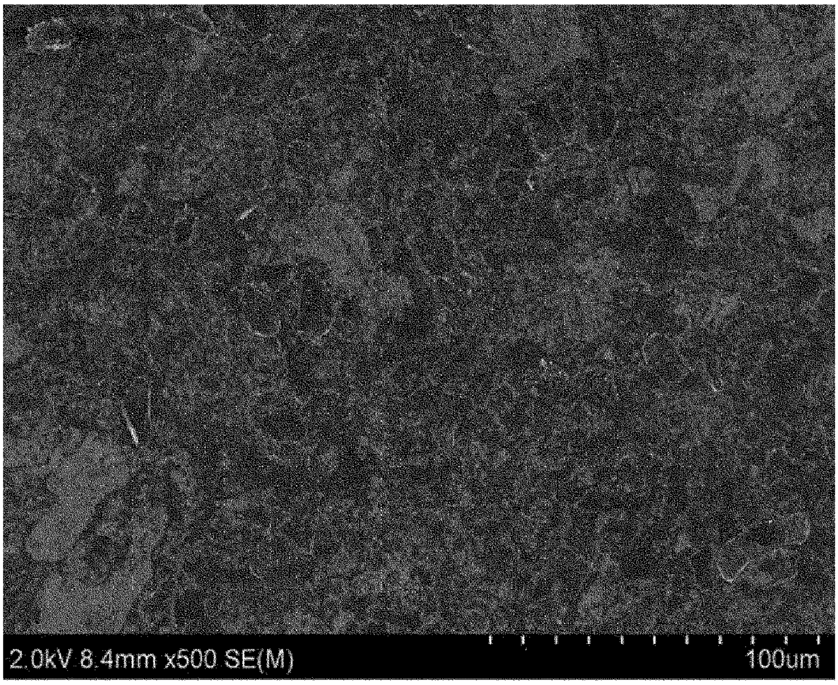

[Figure 9]

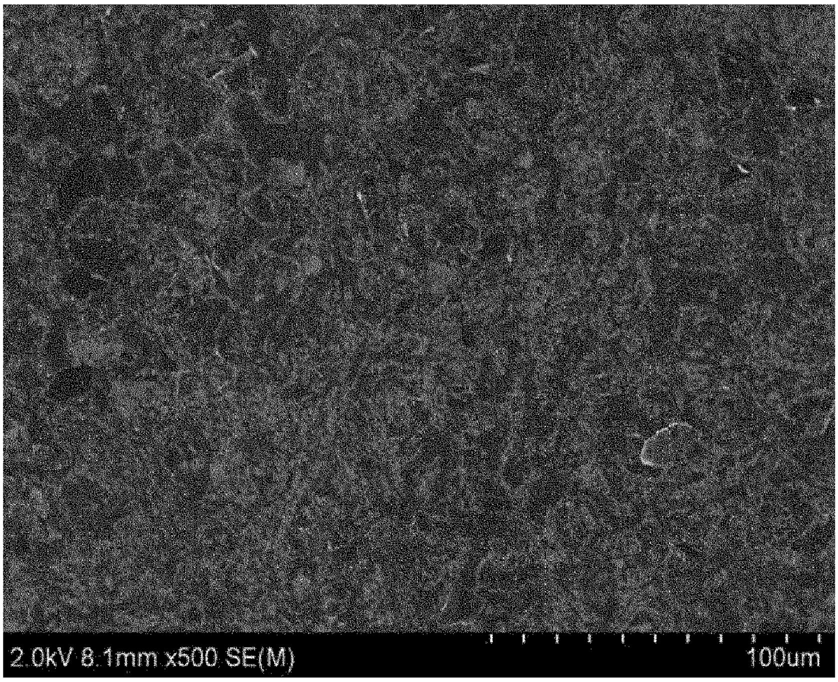


[Figure 10]

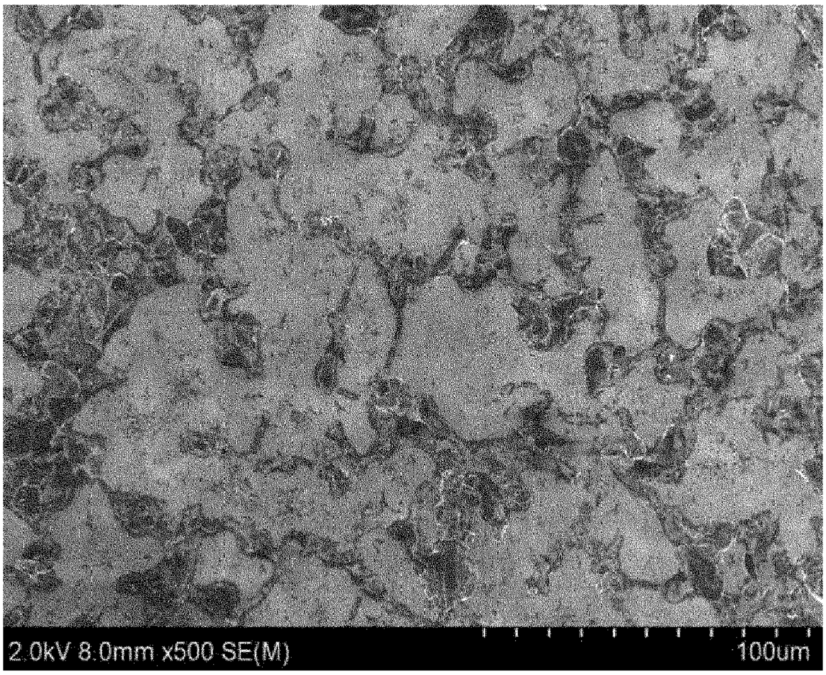

[Figure 11]

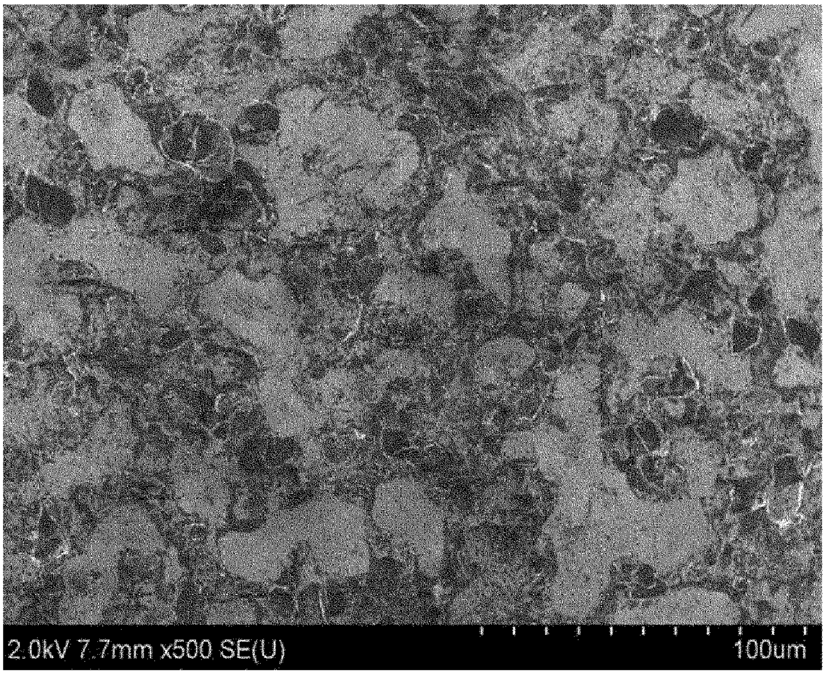


[Figure 12]

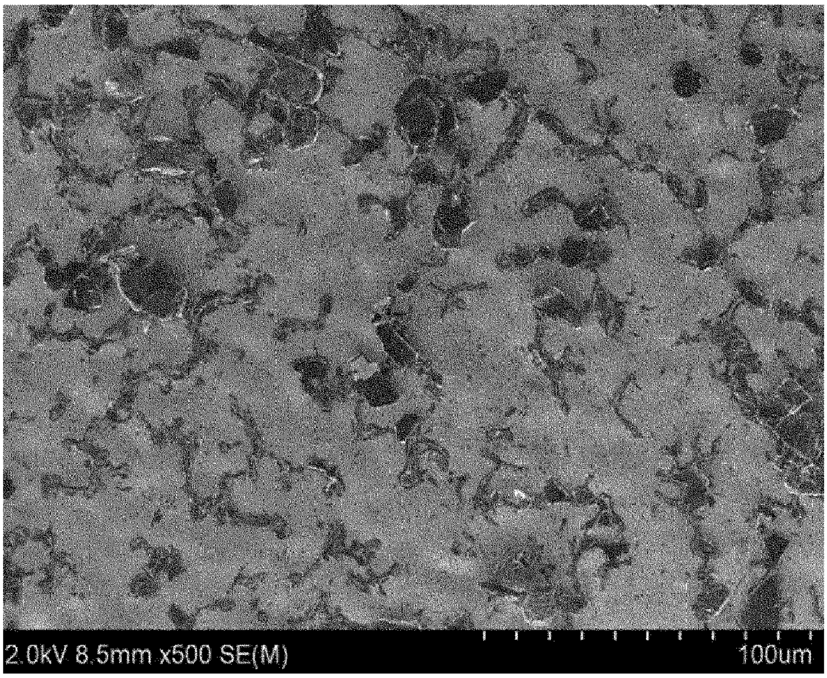

**INTERNATIONAL SEARCH REPORT**

International application No.
**PCT/KR2021/013155**

**A. CLASSIFICATION OF SUBJECT MATTER**

**H01M 4/13**(2010.01)i; **H01M 4/62**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/13(2010.01); H01M 10/058(2010.01); H01M 4/02(2006.01); H01M 4/04(2006.01); H01M 4/133(2010.01); H01M 4/1395(2010.01); H01M 4/62(2006.01); H01M 4/64(2006.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 전류 집전체(current collector), 전극 활물질층(electrode active material layer), 바인더(binder), 접착력(adhesion), 에틸 트리메톡시실란(ethyl trimethoxysilane)

**C. DOCUMENTS CONSIDERED TO BE RELEVANT**

| Category* | Citation of document, with indication, where appropriate, of the relevant passages | Relevant to claim No. |
|---|---|---|
| X | JP 5522487 B2 (TOYOTA MOTOR CORP.) 18 June 2014 (2014-06-18)<br>See paragraphs [0020]-[0023], [0025], [0026], [0036], [0046], [0050], [0055], [0058], [0066] and [0080]-[0090]; and figures 1 and 5. | 1-5,7-11,13,14 |
| Y | | 6,12 |
| Y | KR 10-0729118 B1 (LG CHEM, LTD.) 14 June 2007 (2007-06-14)<br>See paragraph [0029]. | 6 |
| Y | KR 10-2014-0051278 A (MITSUI MINING & SMELTING CO., LTD.) 30 April 2014 (2014-04-30)<br>See claims 1 and 6; and paragraphs [0031], [0032] and [0040]. | 12 |
| A | US 2012-0244435 A1 (HIROSE, T. et al.) 27 September 2012 (2012-09-27)<br>See entire document. | 1-14 |
| A | CN 106972175 A (CHANG CHUN PETROCHEMICAL CO., LTD.) 21 July 2017 (2017-07-21)<br>See entire document. | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 January 2022** | **20 January 2022** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2021/013155**

| Patent document cited in search report | Publication date (day/month/year) | Patent family member(s) | Publication date (day/month/year) |
|---|---|---|---|
| JP 5522487 B2 | 18 June 2014 | CN 102106020 A | 22 June 2011 |
| | | CN 102106020 B | 09 October 2013 |
| | | CN 102272982 A | 07 December 2011 |
| | | CN 102272982 B | 11 June 2014 |
| | | EP 2330663 A1 | 08 June 2011 |
| | | EP 2330663 B1 | 26 September 2018 |
| | | EP 2461396 A1 | 06 June 2012 |
| | | EP 2461396 B1 | 06 May 2020 |
| | | JP 5445871 B2 | 19 March 2014 |
| | | US 2012-0115027 A1 | 10 May 2012 |
| | | US 2012-0135304 A1 | 31 May 2012 |
| | | US 8343656 B2 | 01 January 2013 |
| | | US 9159986 B2 | 13 October 2015 |
| | | WO 2011-013413 A1 | 03 February 2011 |
| | | WO 2011-013414 A1 | 03 February 2011 |
| KR 10-0729118 B1 | 14 June 2007 | CN 100583514 C | 20 January 2010 |
| | | CN 101180755 A | 14 May 2008 |
| | | JP 2008-546135 A | 18 December 2008 |
| | | JP 5110599 B2 | 26 December 2012 |
| | | KR 10-2006-0119797 A | 24 November 2006 |
| | | US 2006-0275661 A1 | 07 December 2006 |
| | | US 7935442 B2 | 03 May 2011 |
| | | WO 2006-123892 A1 | 23 November 2006 |
| | | WO 2006-123892 A9 | 25 June 2009 |
| KR 10-2014-0051278 A | 30 April 2014 | CN 103688394 A | 26 March 2014 |
| | | CN 103688394 B | 17 August 2016 |
| | | JP 6353655 B2 | 04 July 2018 |
| | | TW 201312839 A | 16 March 2013 |
| | | TW I596827 B | 21 August 2017 |
| | | US 2014-0170489 A1 | 19 June 2014 |
| | | WO 2013-018898 A1 | 07 February 2013 |
| US 2012-0244435 A1 | 27 September 2012 | CN 102687314 A | 19 September 2012 |
| | | EP 2518796 A1 | 31 October 2012 |
| | | EP 2518796 B1 | 09 March 2016 |
| | | JP 2011-134584 A | 07 July 2011 |
| | | JP 5120371 B2 | 16 January 2013 |
| | | KR 10-1388666 B1 | 22 April 2014 |
| | | KR 10-2012-0066669 A | 22 June 2012 |
| | | WO 2011-077656 A1 | 30 June 2011 |
| CN 106972175 A | 21 July 2017 | CN 106972175 B | 22 February 2019 |
| | | JP 2017-186649 A | 12 October 2017 |
| | | JP 6246398 B2 | 13 December 2017 |
| | | KR 10-1806953 B1 | 08 December 2017 |
| | | KR 10-2017-0085454 A | 24 July 2017 |
| | | TW 201725771 A | 16 July 2017 |
| | | TW I600200 B | 21 September 2017 |
| | | US 9647272 B1 | 09 May 2017 |

Form PCT/ISA/210 (patent family annex) (July 2019)